# EUROPÄISCHE PATENTANMELDUNG

(11) **EP 0 583 649 A1**
(43) Veröffentlichungstag der Anmeldung: **23.02.1994**
(21) Anmeldenummer: 93111836.8
(22) Anmeldetag: 23.07.1993
(51) Int. Cl.: G01D 11/02, G01D 5/20

(54) **Elektrischer Wegsensor**

(30) Priorität: 01.08.1992 DE 4225533
(71) Anmelder: HOTTINGER BALDWIN MESSTECHNIK GMBH, D-64293 Darmstadt (DE)
(72) Erfinder: Geisler, Peter, Dr., D-64287 Darmstadt (DE); Nicklas, Horst, D-64397 Modautal (DE)
(74) Vertreter: Brandt, Ernst-Ulrich, Dipl.-Phys., Dipl.-Ing.

(57) **Zusammenfassung**

Die Erfindung bezieht sich auf einen elektrischen Wegsensor mit einem Gehäuse (1), in welchem ein Taststift (3) mittels einer Lagervorrichtung (4) verschiebbar geführt ist und welches elektrische Mittel (2, 6) zum Detektieren der Lage des Taststiftes (3) relativ zum Gehäuse (1) enthält. Um einen besonders kurzbauenden Wegsensor zu realisieren, wird vorgeschlagen, daß die elektrischen Mittel (2, 6) und die Lagerung (4) radial ineinanderliegend ausgebildet sind.

## Beschreibung

Die Erfindung betrifft einen elektrischen Wegsensor mit einem Gehäuse, in welchem ein Taststift mittels einer Lagervorrichtung verschiebbar geführt ist und welches elektrische Mittel zum detektieren der Lage des Taststiftes relativ zum Gehäuse enthält. Bekannte elektrische Wegsensoren, egal ob ihre Signalgeber nach dem induktiven, kapazitiven oder optoeletrischen Prinzip arbeiten, sind dergestalt aufgebaut, daß die Lagerung und die elektrischen Mittel axial hintereinander liegen. Dadurch setzt sich die Gesamtlänge des Wegsensors stets mindestens aus der Länge der Lagerung und der Länge des Signalgebers sowie dem Meßhub zusammen, weshalb man bislang relativ große Baulängen in Kauf nehmen mußte.

Der Erfindung liegt daher die Aufgabe zugrunde, einen gattungsgemäßen Wegsensor zu schaffen, der bei einfachem Aufbau eine besonders geringe Baulänge aufweist.

Diese Aufgabe wird erfindungsgemäß dadurch gelöst, daß die elektrischen Mittel und die Lagerung radial ineinanderliegend ausgebildet sind. Durch diese Maßnahme wird es möglich gemacht, elektrische Wegsensoren herzustellen, deren axiale Erstreckung sich lediglich aus der Länge des elektrischen Signalgebers und des Meßhubes zusammensetzt.

Eine besonders stabile Führung bei gleichzeitig kompaktem Aufbau läßt sich dadurch erreichen, daß die Lagerung die elektrischen Mittel radial umgibt. Dies wird auch dadurch unterstützt, daß die Lagerung und die elektrischen Mittel koaxial zueinander angeordnet sind.

Zum exakten Justieren, insbesondere der Nullage, der elektrischen Mittel, ist es von Vorteil, wenn die elektrischen Mittel über mindestens ein einstellbares Zwischenglied mit dem Gehäuse und/oder dem Taststift verbunden sind.

Bei einer bevorzugten Ausführungsform der Erfindung ist vorgesehen, daß die stromführenden Teile der elektrischen Mittel mit dem Gehäuse verbunden sind. Dadurch werden die ektrischen Bauteile vor mechanischer Einwirkung geschützt, was der Lebensdauer bzw. der Betriebssicherheit zugute kommt.

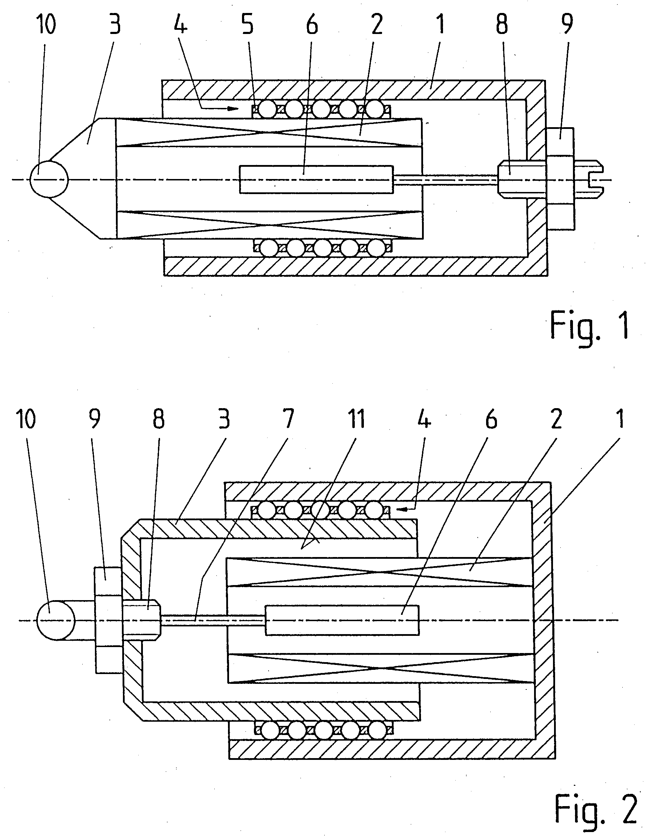

Weitere vorteilhafte Merkmale sowie die Funktion der Erfindung ergeben sich aus der nachstehenden Beschreibung von Ausführungsbeispielen anhand der Zeichnungen. Hierzu zeigt Figur 1 eine erste und Figur 2 eine zweite Ausführungsform der Erfindung.

Für einander entsprechende Teile werden in beiden Figuren die gleichen Bezugszeichen gewählt. Die beiden Ausführungsbeispiele zeigen jeweils induktive Signalgeber, jedoch schließt die Erfindung sämtliche elektrischen Signalgeber, insbesondere kapazitive, photoeketrische, auf dem Transformatorprinzip beruhende und dergleichen Signalgeber ein. Die Signalübertragungs- und Energieversorgungsleitungen der Signalgeber sind in der Zeichnung nicht dargestellt.

Der in Figur 1 dargestellte Wegsensor besitzt ein Gehäuse 1, in welchem ein Spulensystem 2, welches mit dem Taststift 3 fest verbunden ist, axial verschieblich gelagert ist. Die Lagerung erfolgt mittels eines Kugellagers 4, welches zwischen der Innenwand des zylindrischen Gehäuses 1 und der Außenwand des (nicht dargestellten) Spulengehäuses des Spulensystems 2 angeordnet ist. Das Kugellager 4 besitzt einen Käfig 5, welcher in an sich bekannter Weise in axialer Richtung gesichert ist.

Diese Sicherungen sind, ebenso wie die Anschläge zwischen dem Gehäuse 1 und dem Spulensystem 2 bzw. dem Taststift 3, die ebenfalls in axialer Richtung wirken, nicht zeichnerisch dargestellt. In das Spulensystem 2 hinein ragt der weichmagnetische Kern 6, der über eine Verbindungsstange 7 mit dem Gehäuse 1 verbunden ist. Das Maß, um welches der Kern 6 in das Gehäuse 1 hineinragt, ist durch den Gewindeabschnitt 8, mittels dem die Verbindungsstange 7 im Gehäuse 1 verschraubt ist, einstellbar. Durch Verändern der Lage des Kerns 6 können die elektrischen Mittel justiert werden. Nach der Justage wird die eingestellte Lage durch die Kontermutter 9 fixiert, welche auf den Gewindeabschnitt 8 von außen aufgeschraubt ist.

Das Ausführungsbeispiel des induktiven Wegaufnehmers sieht eine Spulenanordnung vor, welche dazu geeignet ist, nach dem Differential-Tauchanker-Prinzip zu arbeiten, so daß sich der Kern 6 bei der Einstellung der Nullage in axialer Richtung mittig zwischen den beiden Meßspulen befindet.

Während beim obigen Ausführungsbeispiel der stromführende Teil des elektrische Signalgebers bewegt wird, sieht das Ausführungsbeispiel gemäß Figur 2 ein fest mit dem Gehäuse 1 verbundenes Spulensystem 2 vor. Das Spulensystem 2 ragt in die zylindrische Ausnehmung 11 des Taststiftes 3 hinein, welcher das Spulensystem 2 radial mit Spiel umgreift. Das Kugellager 4 befindet sich zwischen der äußeren Mantelfläche des Taststiftes 3 und dem Innenmantel des Gehäuses 1. Auf diese Weise erhält man eine gegen Seitenkräfte besonders robuste Lagerung.

Jedoch ist auch bei diesem Ausführungsbeispiel eine Anordnung des Kugellagers auf dem Spulengehäuse möglich, dieses Lager würde sich dann auf der inneren Mantelfläche des Taststiftes 3 abwälzen. An dieser Stelle sei noch angemerkt, daß die Lagerung axial gegeneinander verschiebbarer Aufnehmerteile nicht nur über Kugellager oder Wälzlager, sondern auch über Gleitlagerungen erfolgen kann.

Ebenso wie im obigen Ausführungsbeispiel ragt der eine Verbindungsstange 7 aufweisende weichmagnetische Kern 6 zentral in das Spulensystem 2 hinein, jedoch ist in diesem Fall die Verbindungsstange längs verstellbar mit dem Taststift 3 verschraubt. Durch ein Herausführen der Verbindungsstange 7 aus dem Taststift 3 heraus kann eine Justierung des Kernes 6 auch von Außen bei fertigmontiertem Aufnehmer erfolgen. Es versteht sich, daß auch das Spulensystem 2 in beiden Ausführungsbeispielen axial von außen verstellbar mit dem Taststift 3 bzw. dem Gehäuse 1 verbunden sein kann.

Die Verstellbarkeit der Relativlage zwischen Kern, Spule, Gehäuse und Taststift bei fertig montiertem Aufnehmer stellt eine bedeutende Reduzierung des Fertigungsaufwandes dar.

## Patentansprüche

1. Elektrischer Wegsensor mit einem Gehäuse, in welchem ein Taststift mittels einer Lagervorrichtung verschiebbar geführt ist, und welches elektrische Mittel zum Detektieren der Lage des Taststiftes relativ zum Gehäuse enthält, dadurch gekennzeichnet, daß die elektrischen Mittel (2, 6) und die Lagerung (4) radial ineinanderliegend ausgebildet sind.

2. Elektrischer Wegsensor nach Anspruch 1, dadurch gekennzeichnet, daß die Lagerung (4) die elektrischen Mittel (2, 6) radial umgibt.

3. Elektrischer Wegsensor nach einem der vorhergehenden Ansprüche, dadurch gekennzeichnet, daß die Lagerung (4) und die elektrischen Mittel (2, 6) koaxial zueinander angeordnet sind.

4. Elektrischer Wegsensor nach einem der vorhergehenden Ansprüche, dadurch gekennzeichnet, daß die elektrischen Mittel (2, 6) über mindestens ein einstellbares Zwischenglied (7) mit dem Gehäuse (1) und/oder dem Taststift (3) verbunden sind.

5. Elektrischer Wegsensor nach einem der vorhergehenden Ansprüche, dadurch gekennzeichnet, daß die stromführenden Teile (2) der elektrischen Mittel mit dem Gehäuse (1) mechanisch verbunden sind.
